# EUROPÄISCHE PATENTANMELDUNG

(11) **EP 2 390 923 A2**
(43) Veröffentlichungstag der Anmeldung: **30.11.2011**
(21) Anmeldenummer: 11167562.5
(22) Anmeldetag: 26.05.2011
(51) Int. Cl.: H01L 31/042, F24J 2/52

(54) **Montageanordnung zur Befestigung eines Solarmoduls**

(30) Priorität: 31.05.2010 DE 202010005531 U
(71) Anmelder: SCHÜCO International KG, 33609 Bielefeld (DE)
(72) Erfinder: Wiggers, Melanie, 32657 Lemgo (DE)
(74) Vertreter: Dantz, Jan Henning

(57) **Zusammenfassung**

Eine Montageanordnung zur Befestigung von Solarmodulen (10), insbesondere von Dunnschichtmoduien an einer aus Trapezblechen bestehenden Dachhaut mittels parallel und im Abstand zueinander verlaufenden Horizontalprofiien (1) und Befestigungsvorrichtungen (9, 13), wobei die Horizontalprofile (1) als Mehrkammerhohlprofile ausgebildet sind, die Mehrkammerhohlprofile an mindestens einer Längsseite Befestigungsstege (3) aufweisen, und dass der mindestens eine Befestigungssteg von an den Trapezblechen festgelegten Haltern (4) abschnittsweise übergriffen ist.

## Beschreibung

Die Erfindung betrifft eine Montageanordnung zur Befestigung von Solarmodulen, insbesondere von Dünnschichtmodulen an einer aus Trapezblechen bestehenden Dachhaut mittels parallel und im Abstand zueinander verlaufenden Horizontalprofilen und Befestigungsvorrichtungen.

Die Dünnschichtmodule sind allgemein bekannt und weisen einen äußeren Rahmen auf. Sie sind in vielen Ausführungen bekannt und die Befestigung mit der Dachhaut richtet sich nach Art und/oder Querschnitt dieser Dachhaut.

Zur Eindeckung von Hallen und ähnlichen Gebäuden werden auch Trapezbleche verwendet, wobei durch die äußeren Stege eine Ebene gebildet wird. Die Trapezbleche werden an einer Dachunterkonstruktion festgelegt.

Die Montageanordnungen sollen konstruktiv einfach sein.

Der Erfindung liegt die Aufgabe zugrunde, eine Montageanordnung der eingangs näher beschriebenen Art so auszulegen, dass sie materialsparend und somit kostengünstig herstellbar ist, wobei die Montagezeiten minimiert sind.

Die gestellte Aufgabe wird durch die im Kennzeichen des Anspruchs 1 aufgeführten Merkmale gelöst.

Durch die Verwendung von Mehrkammerhohlprofilen für die Horizontalprofile können diese materialsparend und somit kostengünstig hergestellt werden und durch die Unterteilung durch Stege und Schenkel in mehrere Kammern wird eine ausreichende Steifigkeit erzielt. Da an wenigstens einer Längsseite ein Befestigungssteg vorgesehen ist, können die Mehrkammerhohlprofile durch in Abständen angeordnete Ha!ter festgelegt werden. Diese Festlegung erfolgt beispielsweise durch Schrauben, die zumindest die Trapezbleche durchdringen und auch bis in die Dachunterkonstruktion eingedreht werden können. Die Mehrkammerhohlprofile werden im Pressverfahren hergestellt, und diese Technik ist allgemein benannt Die Halter können einzelne Profilabschnitte sein, die von durch im Pressverfahren hergestellte Stangen abgeschnitten werden.

In einer ersten Ausführung zur Festlegung der C-lorizontafprofiCe ist vorgesehen, dass die Befestigungsstege einer Seite der Horizontalprofile von an den Trapezblechen festgelegten Haltern übergriffen sind, und dass die Befestigungstege an den zugeordneten, parallel zu den Solarmodulen stehenden Flächen der Trapezbleche anliegen. Dabei können die den Trapezblechen zugeordneten Seiten mit Stegen derart versehen sein, dass die den Trapezblechen abgewandten Seiten parallel und im Abstand zu den zugeordneten Stegen stehen. Dadurch wird eine Befestigung fachgerecht.

In einer zweiten Ausführung ist vorgesehen, dass die Befestigungsstege beider Seiten an durch an den Trapezblechen festgelegte Halter festgelegt sind, und dass die Halter parallel und im Abstand zueinander verlaufende, die Befestigungsstege der Horizontalprofile übergreifende Haltestege aufweisen, und dass die Befestigungsstege der Horizontalprofile an den zugewandten Flächen der Halter anliegen.

In weiterer Ausgestaltung ist noch vorgesehen, dass die Horizontalprofile an den den Trapezblechen zugewandten Seiten derart Einziehungen aufweisen, dass deren Schenkel in Verbindung mit den Trapezblechen geschlossene, im Querschnitt trapezförmige Kammern bilden. Dadurch wird bei der Montage die Reibung minimiert und in die Kammern können weitere Bauteile eingesetzt werden.

Dadurch wird ein Freiraum gebildet, der zur weiteren Festlegung von Bauteilen der Montageanordnung genutzt werden kann. Dazu ist in bevorzugter Ausführung vorgesehen, dass die 1-lorizontaCprofile in den mittleren Bereichen hinterschnittene Nuten aufweisen, in die Nutensteine mit Gewindebohrungen eingesetzt sind. In diese Nutensteine können dann Schrauben eingedreht werden. Dadurch können an den Horizontalprofilen Zwischenprofile festgelegt werden, die Befestigungsvorrichtungen oder Haltevorrichtungen für die Solarmodule aufnehmen. Zur zusätzlichen Sicherung der Zwischenprofile und der Nutensteine kann der Schaft jeder Schraube mit einem Ansatz oder einer Spitze versehen sein, die einen Steg des Horizontalprofiles, vorzugsweise den die trapezförmige Kammer begrenzenden Steg durchdringt, so dass eine formschlüssige Festlegung gegeben ist.

Die Befestigungsvorrichtungen bestehen vorzugsweise aus zwei Klemmprofilen, zwischen den die Solarmodule festgelegt sind. Diese beiden Klemmprofile können durch Schraubverbindungen aufeinander zu bewegt werden. Dabei kann jeweils ein Schraubenkopf in eine hinterschnittene Nut des Zwischenprofils eingreifen und auf den Schraubenschaft wird eine mit einem Innengewinde versehene Schraubkappe aufgesetzt.

Anhand der beiliegenden Zeichnungen wird die Erfindung noch näher erläutert.

Es zeigen:
- Figur 1: eine bevorzugte Ausführungsform einer erfindungsgemäßen Montageanordnung mit Blick auf die Stirnflächen der Horizontalprofile,
- Figur 2: die Festlegung der Horizontalprofile in einer zweiten Ausführung zeigend und
- Figur 3: eine der Figur 2 entsprechende Draufsicht.

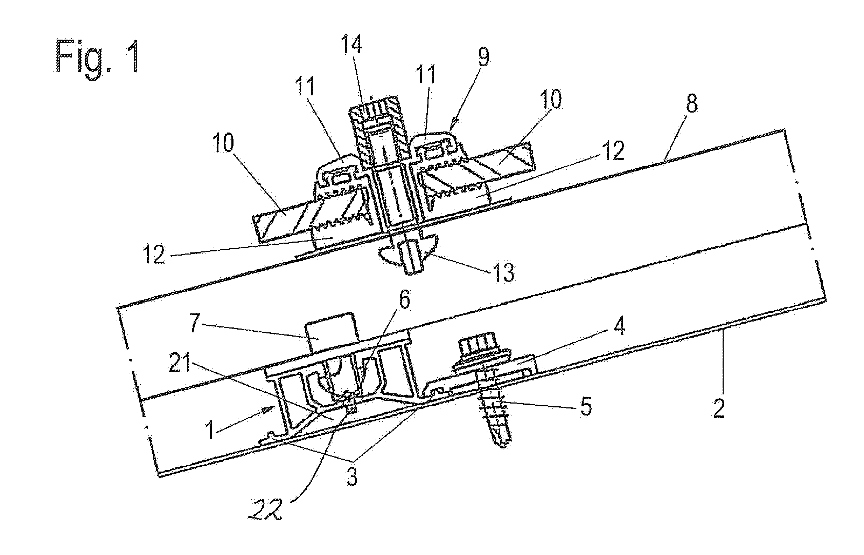

Aus Gründen der vereinfachten Darstellung ist in der Figur 1 nur ein Horizontalprofil dargestellt, Die an einer Dachfläche angesetzten Horizontalprofile 1 verlaufen parallel und im Abstand zueinander sowie parallel und im Abstand zur Traufe und zum First einer Dachfläche. Der äußere Steg jedes Trapezbleches ist durch das Bezugszeichen 2 dargestellt. Diese äußeren Stege liegen in einer Ebene und bilden demzufolge Auflageflächen für die Horizontalprofile 1.
Die Figur 1 zeigt deutlich, dass die Horizontatprofite 1 als Mehrkammerhohlprofile ausgebildet sind, die durch Stege oder Schenkel begrenzt sind. An den beiden Längsseiten der Horizontalprofiie 1 sind zwei abragende Befestigungsstege 3 angeformt, die ein einstückiges Formteil mit den Mehrkammerhohlprofilen bilden. Bei der Ausführung nach der Figur 1 wird der in der Darstellung rechte Befestigungssteg 3 von im Abstand zueinander angeordneten Haltern 4 übergriffen, wobei die Halter 4 mittels Schrauben 5 an den Trapezblechen und gegebenenfalls auch an der Dachunterkonstruktion festgelegt sind. Jeder Halter 4 ist noch an der den Stegen 2 der Trapezbleche zugewandten Seite mit Nuten und Stegen versehen, damit die äußeren Flächen parallel und im Abstand zu den Stegen 2 der Trapezbleche verlaufen. In eine Kammer jedes Horizontalprofiles 1 ist ein Nutenstein 6 eingesetzt, der vorzugsweise im Bereich der Halter 4 liegt und mit einer Gewindebohrung versehen ist. Die Kammer könnte auch als hinterschnittene Nut ausgebildet sein. In die Nutensteine 6 sind Schrauben 7 eingedreht, um Zwischenprofile 8 an den Horizontalprofilen 1 festzulegen.

An diesen Zwischenprofilen 8 sind noch erläuterte Befestigungsvorrichtungen 9 angeordnet, die als Klemmeinrichtungen ausgebildet sind, um die Randbereiche von Dünnschichtsolarmodulen 10 festzuklemmen. Die Befestigungsvorrichtung 9 besteht aus zwei Klemmprofilen 11, 12, die Nuten aufweisen, in die die Ränder der Dünnschichtsolarmodulen 10 eingreifen. Zur Festlegung dieser Klemmprofile 11, 12 ist eine Hammerkopfschraube oder eine sonstige mit einem Kopf versehene Schraube 13 in das Zwischenprofil 8 eingesetzt. Vorzugsweise ist dazu das Zwischenprofil 8 mit wenigstens einer hinterschnittenen Nut versehen. Die Hammerkopfschraube 13 durchdringt die beiden Klemmprofile 11,12 und auf das freie Ende ist eine Schraubkappe 14 aufgedreht. Die beiden Klemmprofile 11,12 könnten auch als Ober- und Unterteil werden. Die Figur 1 zeigt, das die Schraube 7 einen Ansatz oder eine Spitze 22 aufweist, die zur formschlüssigen Festlegung den die trapezförmige Kammer begrenzenden Steg durchdringt.

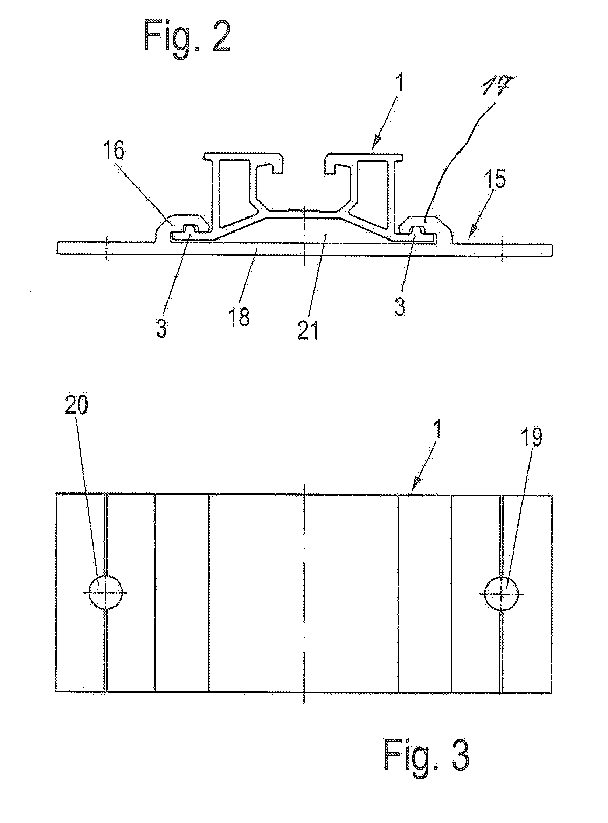

Die Ausführung nach der Figur 2 zeigt das gleiche Horizontalprofil 1. Die Befestigung an den Stegen 2 der Trapezbleche erfolgt jedoch durch einen einstückigen Halter 15, der mit zwei parallel und im Abstand zueinander verlagfenden Winkelstegen 16, 17 versehen ist, die die Befestigungsstege 3 der Horizontalprofile 1 übergreifen. Eine Grundplatte 18 des Halters 15 erstreckt sich beidseitig über die Winkelstege 16, 17 hinaus. In diese überstehenden Bereiche sind Schraubenlöcher 19, 20 eingebracht, um diesen Halter 15 an dem jeweiligen Steg 2 des Trapezbleches festzulegen. Wie die Figur 2 zeigt, liegen dann die Befestigungsstege 3 an der Grundplatte 18 an.

Die Erfindung ist nicht auf die dargestellten Ausführungsbeispiele beschränkt. Wesentlich ist, dass die Horizontalprofile 1 als Mehrkammerhohlprofile ausgebildet sind und an wenigstens einer Längsseite mit einem Befestigungssteg 3 versehen sind, so dass sie mittels Halter 4 an den äußeren Stegen 2 der Trapezbleche und gegebenenfalls auch an der Unterkonstruktion des Daches festlegbar sind.

## Patentansprüche

1. Montageanordnung zur Befestigung von Solarmodulen (10), insbesondere von Dünnschichtmodulen an einer aus Trapezblechen bestehenden Dachhaut mittels parallel und im Abstand zueinander verlaufenden Horizontalprofilen (1) und Befestigungsvorrichtungen (9, 13), **dadurch gekennzeichnet, dass**
a) die Horizontalprofile (1) als Mehrkammerhohlprofile ausgebildet sind,
b) die lltiehrl<amrnerhohiprofüe an mindestens einer Längsseite Befestigungsstege (3) aufweisen,
c) und dass der mindestens eine Befestigungssteg von an den Trapezblechen festgelegten Haltern (4) abschnittsweise übergriffen ist.

2. Montageanordnung nach Anspruch 1, **dadurch gekennzeichnet, dass die** Befestigungsstege (3) der Horizontalprofile (1) einer Seite von an den Trapezblechen festgelegten Haltern (4) übergriffen sind, und dass die Befestigungsstege (3) an den zugeordneten, parallel zu den Solarmodulen (10) stehenden Flächen der Trapezbleche anliegen.

3. Montageanordnung nach Anspruch 1, **dadurch gekennzeichnet, das die** Befestigungsstege (3) beider Seiten der Horizontalprofile (1) an durch an den Trapezblechen festgelegten Haltern der zwei parallel und im Abstand zueinander stehenden, die Befestigungsstege (3) übergreifenden Haltern (4) festgelegt sind, und dass die Befestigungsstege (3) der Horizontalprofile (1) an einer Grundplatte (18) der Halter (15) anliegen.

4. Montageanordnung nach einem oder mehreren der vorstehenden Ansprüche, **dadurch gekennzeichnet, dass** die Horizontalprofile (1) an der den Trapezblechen zugewandten Seiten Einziehungen (21) aufweisen, deren Schenkel in Verbindung mit den Stegen (2) der Trapezbleche im Querschnitt trapezförmige Kammern bilden.

5. Montageanordnung nach einem oder mehreren der vorstehenden Ansprüche, **dadurch gekennzeichnet, dass** die Horizontalprofile (1) in den mittleren Bereichen hinterschnittene Nuten oder geschlossene Kammern aufweisen, in die Nutensteine mit Gewindebohrungen eingesetzt sind.

6. Montageanordnung nach einem oder mehreren der vorstehenden Ansprüche, **dadurch gekennzeichnet**, das in die Nutensteine (6) Schrauben (7) zur Befestigung eines Zwischenprofiles (8) an den Horizontalprofiien (1) eingedreht sind.

7. Montageanordnung nach Anspruch 6, **dadurch gekennzeichnet, dass** der Schaft jeder Schraube (7) zur formschlüssigen Festlegung einen in einen Steg des Horizontalprofiles (1) eingreifenden Ansatz, vorzugsweise eine Spitze (22) aufweist.

8. Montageanordnung nach einem oder mehreren der vorstehenden Ansprüche, **dadurch gekennzeichnet, dass** die So!armodu!e (10) mittel Befestigungsvorrichtungen (9) an dem Zwischenprofil (8) festgelegt sind.

9. Montageanordnung nach einem oder mehreren der vorstehenden Ansprüche, **dadurch gekennzeichnet, dass** die Befestigungsvorrichtung (9) aus zwei Klemmprofilen (11, 12) besteht, die durch eine mit einem Kopf versehene Schraube (13) und einer aufgedrehten Schraubkappe (14) fest mit einander verbunden sind.

10. Montageanordnung nach einem oder mehreren der vorstehenden Ansprüche, **dadurch gekennzeichnet, das** der Kopf der Schraube (13) in einer hinterschnittenen Nut des Zwischenprofils (8) angeordnet ist.
